# EUROPÄISCHE PATENTSCHRIFT

(11) **EP 3 013 653 B1**
(45) Veröffentlichungstag und Bekanntmachung des Hinweises auf die Patenterteilung: **06.04.2022**
(21) Anmeldenummer: 14730920.7
(22) Anmeldetag: 18.06.2014
(51) Int. Cl.: B60S 1/50

(54) **BAUTEIL ZUM EINFÜLLEN EINER FLÜSSIGKEIT IN EINEN FLÜSSIGKEITSBEHÄLTER**
COMPONENT FOR ADDING A LIQUID TO A LIQUID CONTAINER
ÉLÉMENT POUR VERSER UN LIQUIDE DANS UN RÉSERVOIR DE LIQUIDE

(30) Priorität: 24.06.2013 DE 102013211958
(43) Veröffentlichungstag der Anmeldung: 04.05.2016
(73) Patentinhaber: Bayerische Motoren Werke Aktiengesellschaft, 80809 München (DE)
(72) Erfinder: ERNST, Lorenz, 85598 Baldham (DE)
(86) Internationale Anmeldenummer: PCT/EP2014/062791
(87) Internationale Veröffentlichungsnummer: WO 2014/206824

(56) Entgegenhaltungen:
- EP-A1- 1 256 498
- DE-A1- 10 234 105
- DE-U1- 20 022 285
- JP-A- 2010 089 702

## Beschreibung

Die Erfindung betrifft ein Bauteil zum Einfüllen einer Flüssigkeit in einen Flüssigkeitsbehälter, aufweisend einen eine Einfüllöffnung umfassenden Einfüllstutzen und einen mit dem Flüssigkeitsbehälter verbindbaren, eine Auslassöffnung umfassenden Auslassabschnitt.

Des Weiteren betrifft die Erfindung eine Baueinheit zur Aufnahme einer Flüssigkeit, aufweisend wenigstens einen Flüssigkeitsbehälter und zumindest ein Bauteil zum Einfüllen der Flüssigkeit in den Flüssigkeitsbehälter.

In Fahrzeugen sind üblicherweise Flüssigkeitsbehälter zur Aufnahme von verschiedenen Flüssigkeiten vorhanden. Beispielsweise sind Flüssigkeitsbehälter zur Aufnahme von Waschwasser, Kühlflüssigkeit oder dergleichen verbaut.

Die jeweilige Flüssigkeit kann über ein mit dem Flüssigkeitsbehälter verbundenes Einfüllbauteil in den Flüssigkeitsbehälter eingefüllt werden. Dies ist insbesondere in Zusammenhang mit einem zur Bevorratung von Waschwasser vorgesehenen Flüssigkeitsbehälter bekannt. Das Befüllen eines solchen Waschwasserbehälters wird in der Regel von einem Nutzer eines Fahrzeugs durchgeführt, kann aber auch, beispielsweise im Zuge von Wartungsarbeiten, von einem Fachpersonal durchgeführt werden.

Bekannt ist es weiter, dass die Befüllung eines Waschwasserbehälters lediglich relativ langsam und oft auch nur mit Unterbrechungen erfolgen kann. Dies ist deshalb der Fall, da herkömmliche Einfüllbauteile in ihrem Verlauf meist einen relativ gleichbleibend kleinen, kreisförmigen Querschnitt und häufig auch Biegungen mit relativ engen Biegeradien aufweisen. Durch den Kontakt der Flüssigkeit mit der Innenwandung solcher Einfüllbauteile kommt es zu Verwirbelungen in der Flüssigkeit und zu einem Staudruck in der Flüssigkeit. Hierdurch kommt es wiederum zu einem Flüssigkeitsrückstau und zur Schaumbildung in dem Einfüllbauteil. Um dies zu verhindern, ist es erforderlich, die Flüssigkeit entweder sehr behutsam und langsam in das Einfüllbauteil einzufüllen oder einen entsprechenden Befüllvorgang zu unterbrechen, um das Auflösen des Schaums abzuwarten.

Mit der Patentschrift DE 102 34 105 B4 wird ein Flüssigkeitsbehälter für Fahrzeuge vorgeschlagen, welcher glucker- und spritzfrei mit einer Flüssigkeit befüllbar sein soll.

Die WO 2013/085503 A1 beschreibt einen Einfüllstutzen mit einem Körper, der eine Öffnung, ein mit der Öffnung verbundenes Reservoir und einen Fluidkanal umfasst, der an das Reservoir angrenzt.

Aufgabe der Erfindung ist es, ein wenig zeit- und arbeitsaufwändiges Einfüllen einer Flüssigkeit in einen Flüssigkeitsbehälter zu ermöglichen.

Diese Aufgabe wird durch ein Bauteil mit den Merkmalen gemäß Patentanspruch 1 gelöst. Des Weiteren wird die Aufgabe durch eine Baueinheit mit den Merkmalen nach Patentanspruch 7 gelöst. Vorteilhafte Ausgestaltungen sind in den abhängigen Ansprüchen wiedergegeben, welche jeweils für sich genommen oder in verschiedener Kombination miteinander einen Aspekt der Erfindung darstellen können.

Erfindungsgemäß weist das Bauteil wenigstens einen zwischen dem Einfüllstützen und dem Auslassabschnitt angeordneten Zwischenabschnitt auf, der zumindest in seinem an den Einfüllstutzen angrenzenden Bereich im Vergleich zu dem Einfüllstutzen mindestens eine zum Beruhigen einer in das Bauteil eingefüllten Flüssigkeit eingerichtete Aufweitung des Bauteils ausbildet.

Durch die Ausbildung der Aufweitung im Anschluss an den Einfüllstutzen kann sich eine in das Bauteil eingefüllte Flüssigkeit beruhigen, so dass es zu einem deutlich geringeren Staudruck in der Flüssigkeit kommt, als es bei herkömmlichen Einfüllbauteilen der Fall ist. Dadurch kann die Flüssigkeit schneller in das Bauteil und über dieses in einen Flüssigkeitsbehälter eingefüllt werden. Insbesondere wird durch die Aufweitung des Bauteils und die damit einhergehende Beruhigung der darin eingefüllten Flüssigkeit eine Schaumbildung innerhalb des Bauteils erfolgreich vermieden. Daher kann die Flüssigkeit ohne Unterbrechungen in das Bauteil und über dies in einen Flüssigkeitsbehälter eingefüllt werden.

Die Aufweitung bildet eine Kammer aus, die derart relativ zu dem Einfüllstutzen angeordnet ist, dass eine in den Einfüllstutzen eingefüllte Flüssigkeit gegen eine Wand der Kammer geführt wird, die dem Einfüllstutzen gegenüberliegend angeordnet ist. Die Wand bildet hiernach eine Prallfläche, über die die Flüssigkeitsströmung umgelenkt werden kann. Hierdurch lässt sich das Bauteil an die Größe und Ausgestaltung des jeweilig verfügbaren Bauraums, in dem das Bauteil angeordnet werden soll, optimal anpassen. Die Formgebung der Kammer kann ebenfalls an die Größe und Ausgestaltung des jeweilig verfügbaren Bauraums angepasst sein.

Eine Projektion der Querschnittsfläche des Einfüllstutzens auf die Wand ist umlaufend oder teilweise umlaufend von einem Randabschnitt der Wand umgeben. Dies kommt einer speziellen Ausgestaltung und Anordnung der Kammer mit Bezug auf den Einfüllstutzen gleich. Je größer der die Projektion der Querschnittsfläche des Einfüllstutzens auf der Wand umlaufend umgebende Randabschnitt der Wand ist, desto besser ist die Kammer für den erfindungsgemäßen Zweck ausgebildet.

Der Auslassabschnitt ist mit einer quer zu der Wand angeordneten Seite der Kammer verbunden. Hiernach kann eine in die Aufweitung bzw. die Kammer eingefüllte Flüssigkeit im Wesentlichen seitlich aus der Kammer abgeleitet werden.

Eine weitere vorteilhafte Ausgestaltung sieht vor, dass die Projektion der Querschnittsfläche des Einfüllstutzens auf die Wand mittig an der Wand angeordnet ist.

Es wird weiter als vorteilhaft erachtet, wenn die Projektion der Querschnittsfläche des Einfüllstutzens auf die Wand in einem Randbereich der Wand angeordnet ist. Diese außermittige Anordnung der Projektionsfläche kann alternativ zu der vorgenannten mittigen Anordnung der Projektionsfläche gewählt werden. Die optimale Anordnung der Projektionsfläche an der Wand ist vorzugsweise unter Berücksichtigung der Größe und der Ausgestaltung des jeweilig zur Verfügung stehenden Bauraums ausgewählt.

Nach einer weiteren vorteilhaften Ausgestaltung ist der Auslassabschnitt trichterförmig ausgebildet. Die über den Einfüllstutzen in das Bauteil eingefüllte Flüssigkeit, welche sich nach dem Passieren des Zwischenabschnitts beruhigt hat, kann so einer Befüllöffnung in einem Flüssigkeitsbehälter zugeführt werden. Über den trichterförmigen Auslassabschnitt kann die beruhigte Flüssigkeit schnell und mit relativ hoher Geschwindigkeit einem Flüssigkeitsbehälter zugeführt werden.

Weiter wird vorgeschlagen, dass der Auslassabschnitt zumindest teilweise einen kreisförmigen Querschnitt aufweist. Dies entspricht einer üblichen Ausgestaltung, so dass das Bauteil auf einfache Art und Weise mit einem herkömmlichen Flüssigkeitsbehälter verbunden werden kann, ohne dass an dem Flüssigkeitsbehälter bauliche Veränderungen vorgenommen werden müssen.

Ferner wird es als vorteilhaft erachtet, wenn der Auslassabschnitt zumindest teilweise einen rechteckigen Querschnitt aufweist. Welche Form für den Querschnitt des Auslassabschnitts gewählt wird, hängt von den jeweiligen Gegebenheiten ab. Bei einem Auslassabschnitt mit rechteckigem Querschnitt fliest die Flüssigkeit vorzugsweise im Wesentlichen über eine der langen Seitenflächen des Auslassabschnitts hinweg, so dass sich die Flüssigkeit auch während ihres Passierens durch den Auslassabschnitt weiter beruhigen kann.

Weiter erfindungsgemäß ist das Bauteil der Baueinheit gemäß einer der vorgenannten Ausgestaltungen oder einer beliebigen Kombination derselben ausgebildet. Damit sind die oben mit Bezug auf das Bauteil genannten Vorteile verbunden. Der Flüssigkeitsbehälter kann zur Aufnahme von Waschwasser, Kühlflüssigkeit oder dergleichen ausgebildet sein

Weitere Einzelheiten, Merkmale und Vorteile der Erfindung ergeben sich aus der nachfolgenden Beschreibung und den Figuren. Es zeigen:
- Figur 1: eine perspektivische Darstellung einer beispielhaften Ausführungsform des erfindungsgemäßen Bauteils,
- Figur 2:: eine Schnittdarstellung des in Figur 1 gezeigten Bauteils,
- Figur 3:: eine perspektivische Darstellung einer weiteren beispielhaften Ausführungsform des erfindungsgemäßen Bauteils,
- Figur 4: eine perspektivische Darstellung einer weiteren beispielhaften Ausführungsform des erfindungsgemäßen Bauteils,
- Figur 5: eine Schnittdarstellung des in Figur 4 gezeigten Bauteils,
- Figur 6: eine weitere Schnittdarstellung des in Figur 4 gezeigten Bauteils,
- Figur 7: eine perspektivische Darstellung einer weiteren beispielhaften Ausführungsform des erfindungsgemäßen Bauteils,
- Figur 8: eine Schnittdarstellung des in Figur 7 gezeigten Bauteils,
- Figur 9: eine weitere Schnittdarstellung des in Figur 7 gezeigten Bauteils, und
- Figur 10:: eine schematische Darstellung einer beispielhaften Ausführungsform der erfindungsgemäßen Baueinheit.

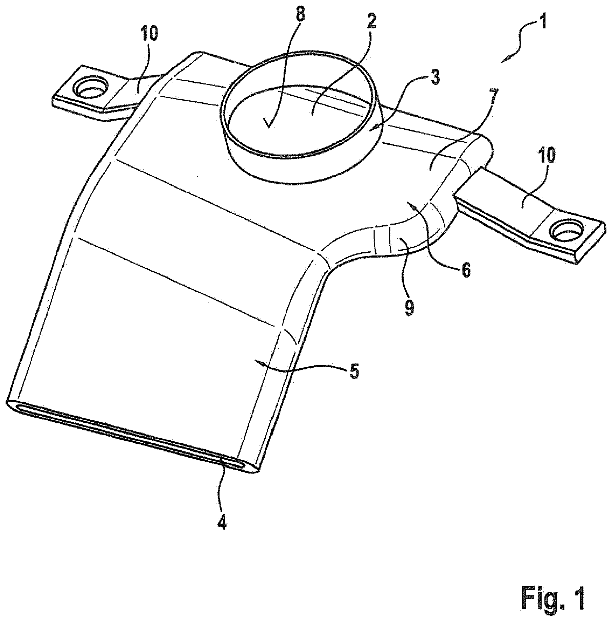

Figur 1 zeigt eine perspektivische Darstellung einer beispielhaften Ausführungsform des erfindungsgemäßen Bauteils 1 zum Einfüllen einer Flüssigkeit in einen nicht gezeigten Flüssigkeitsbehälter. Das Bauteil 1 weist einen eine Einfüllöffnung 2 umfassenden Einfüllstutzen 3 und einen mit dem Flüssigkeitsbehälter verbindbaren, eine Auslassöffnung 4 umfassenden Auslassabschnitt 5 auf. Des Weiteren umfasst das Bauteil 1 einen zwischen dem Einfüllstützen 3 und dem Auslassabschnitt 5 angeordneten Zwischenabschnitt 6, der zumindest in seinem an den Einfüllstutzen 3 angrenzenden Bereich im Vergleich zu dem Einfüllstutzen 3 eine zum Beruhigen einer in das Bauteil 1 eingefüllten Flüssigkeit eingerichtete Aufweitung des Bauteils 1 ausbildet.

Die Aufweitung bildet eine Kammer 7 aus, die derart relativ zu dem Einfüllstutzen 3 angeordnet ist, dass eine in den Einfüllstutzen 3 eingefüllte Flüssigkeit gegen die dem Betrachter abgewandte untere Wand 8 der Kammer 7 geführt wird, die dem Einfüllstutzen 3 gegenüberliegend angeordnet ist. Wie sich aus Figur 1 ergibt, ist die Projektion der Querschnittsfläche des Einfüllstutzens 3 auf die Wand 8 umlaufend von einem Randabschnitt der Wand 8 umgeben, wobei die Projektion der Querschnittsfläche des Einfüllstutzens 3 auf die Wand 8 mittig an der Wand 8 angeordnet ist. Seitlich an der Kammer 7 sind Befestigungslaschen 10 angeordnet, über die das Bauteil 1 an einer nicht gezeigten Karosserie eines Fahrzeugs befestigbar ist.

Der Auslassabschnitt 5 ist mit einer quer zu der Wand 8 angeordneten Seite 9 der Kammer 7 verbunden. Der Auslassabschnitt 5 ist in seinem Verbindungsbereich mit der Kammer 7 trichterförmig ausgebildet und weist einen rechteckigen Querschnitt auf.

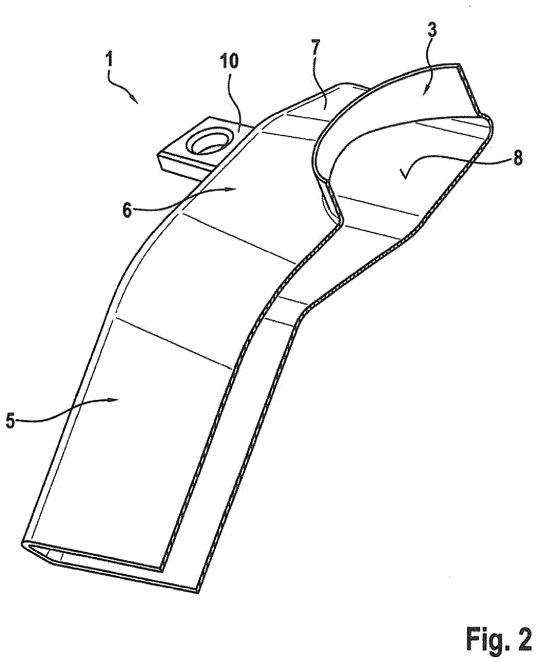

Figur 2 zeigt eine Schnittdarstellung des in Figur 1 gezeigten Bauteils 1.

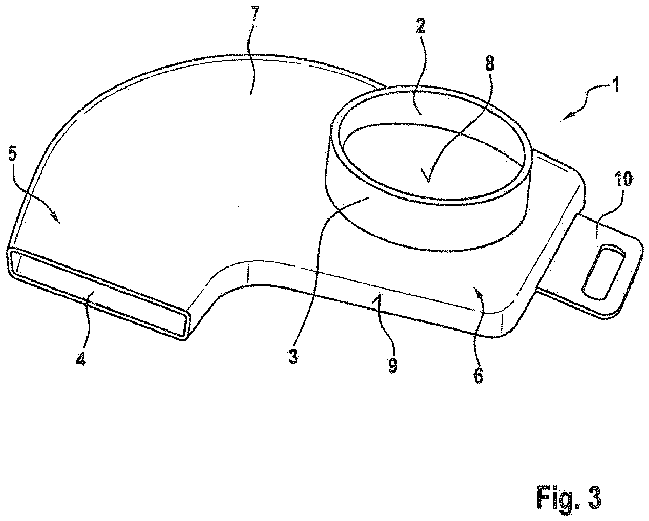

Figur 3 zeigt eine perspektivische Darstellung einer weiteren beispielhaften Ausführungsform des erfindungsgemäßen Bauteils 1 zum Einfüllen einer Flüssigkeit in einen nicht gezeigten Flüssigkeitsbehälter. Ein wesentlicher Unterschied zu dem in den Figuren 1 und 2 gezeigten Ausführungsbeispiel besteht darin, dass die Projektion der Querschnittsfläche des Einfüllstutzens 3 auf die Wand 8 in einem Randbereich der Wand 8 angeordnet ist.

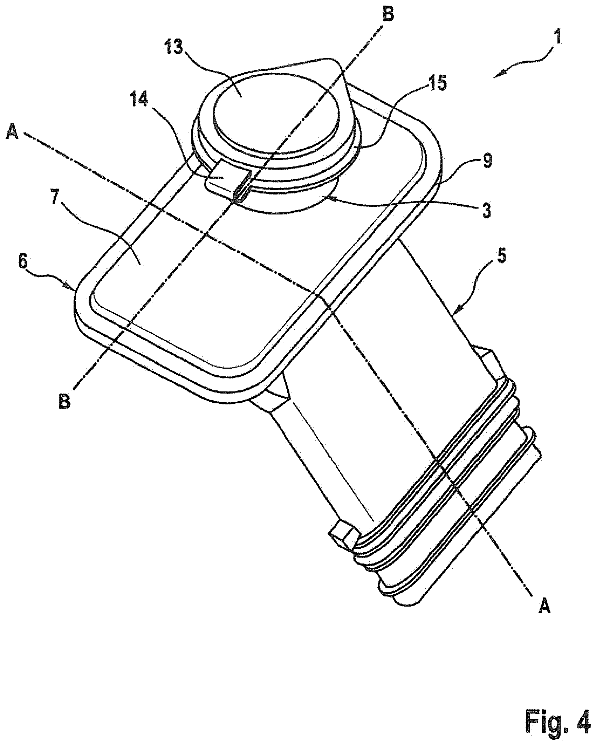

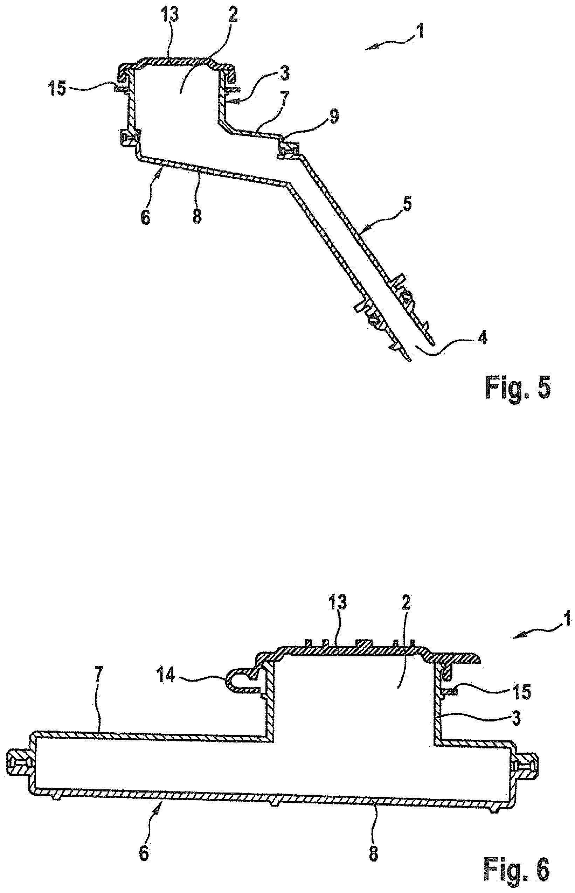

Figur 4 zeigt eine perspektivische Darstellung einer weiteren beispielhaften Ausführungsform des erfindungsgemäßen Bauteils 1 zum Einfüllen einer Flüssigkeit in einen nicht gezeigten Flüssigkeitsbehälter. Das Bauteil 1 weist einen eine in den Figuren 5 und 6 gezeigte Einfüllöffnung 2 umfassenden Einfüllstutzen 3 und einen mit dem Flüssigkeitsbehälter verbindbaren, eine in Figur 5 gezeigte Auslassöffnung 4 umfassenden Auslassabschnitt 5 auf. Des Weiteren umfasst das Bauteil 1 einen zwischen dem Einfüllstützen 3 und dem Auslassabschnitt 5 angeordneten Zwischenabschnitt 6, der zumindest in seinem an den Einfüllstutzen 3 angrenzenden Bereich im Vergleich zu dem Einfüllstutzen 3 eine zum Beruhigen einer in das Bauteil 1 eingefüllten Flüssigkeit eingerichtete Aufweitung des Bauteils 1 ausbildet. Die Aufweitung des Bauteils 1 wird durch die, insbesondere auch äußere, Formgebung des Zwischenabschnitts 6 erzeugt, nicht durch eine Variation der Materialstärke der Wandungen des Zwischenabschnitts im Vergleich zur Materialstärke der Wandungen des Einfüllstutzens 3, da eine solche Variation der Wandstärke für den erfindungsgemäßen Zweck deutlich zu gering ausfallen würde. An dem Einfüllstutzen 3 ist ein in seiner Schließstellung befindlicher Deckel 13 angeordnet, welcher über einen in den Figuren 5 und 6 gezeigten Rastmechanismus an dem Einfüllstutzen 3 festgelegt ist. Der Deckel 13 ist über eine flexible Lasche 14 mit einem unverlierbar an dem Einfüllstutzen 3 angeordneten Ring 15 verbunden.

Figur 5 zeigt eine Schnittdarstellung des in Figur 4 gezeigten Bauteils 1 gemäß der in Figur 4 gezeigten Schnittebene A-A. Die Aufweitung bildet eine Kammer 7 aus, die derart relativ zu dem Einfüllstutzen 3 angeordnet ist, dass eine in den Einfüllstutzen 3 eingefüllte Flüssigkeit gegen die untere Wand 8 der Kammer 7 geführt wird, die dem Einfüllstutzen 3 gegenüberliegend angeordnet ist. Wie sich aus Figur 5 ergibt, ist die Projektion der Querschnittsfläche des Einfüllstutzens 3 auf die Wand 8 teilweise umlaufend von einem Randabschnitt der Wand 8 umgeben, wobei die Projektion der Querschnittsfläche des Einfüllstutzens 3 auf die Wand 8 in einem Randbereich der Wand 8 angeordnet ist. Der Auslassabschnitt 5 ist mit einer quer zu der Wand 8 angeordneten Seite 9 der Kammer 7 verbunden. Der Auslassabschnitt 5 ist in seinem Verbindungsbereich mit der Kammer 7 trichterförmig ausgebildet und weist einen annähernd rechteckigen, abgeflachten Querschnitt auf.

Figur 6 zeigt eine Schnittdarstellung des in Figur 4 gezeigten Bauteils 1 gemäß der in Figur 4 gezeigten Schnittebene B-B.

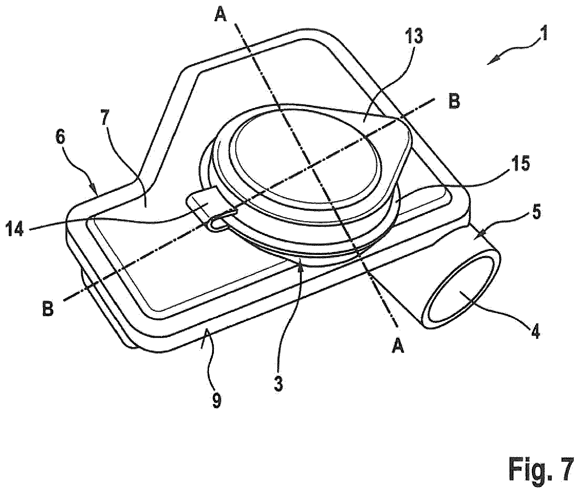

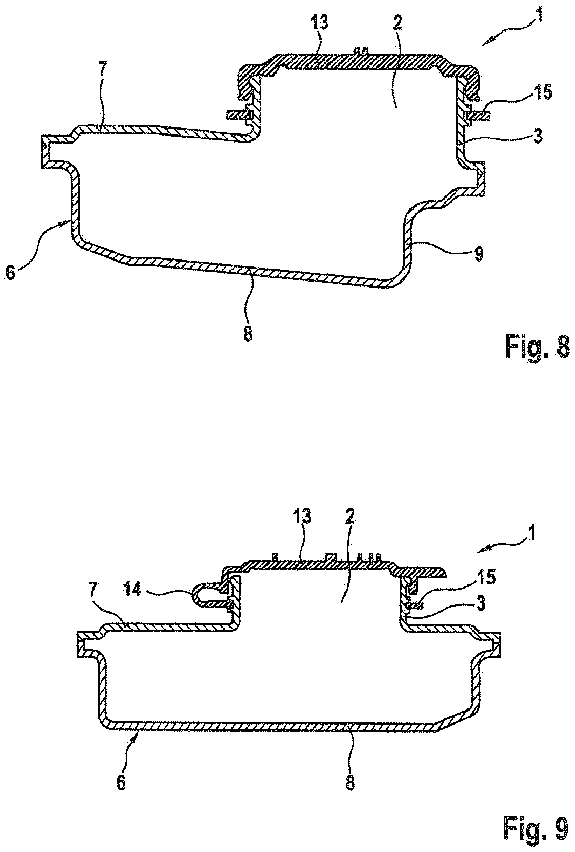

Figur 7 zeigt eine perspektivische Darstellung einer weiteren beispielhaften Ausführungsform des erfindungsgemäßen Bauteils 1 zum Einfüllen einer Flüssigkeit in einen nicht gezeigten Flüssigkeitsbehälter. Das Bauteil 1 weist einen eine in den Figuren 8 und 9 gezeigte Einfüllöffnung 2 umfassenden Einfüllstutzen 3 und einen mit dem Flüssigkeitsbehälter verbindbaren, eine Auslassöffnung 4 umfassenden Auslassabschnitt 5 auf. Des Weiteren umfasst das Bauteil 1 einen zwischen dem Einfüllstützen 3 und dem Auslassabschnitt 5 angeordneten Zwischenabschnitt 6, der zumindest in seinem an den Einfüllstutzen 3 angrenzenden Bereich im Vergleich zu dem Einfüllstutzen 3 eine zum Beruhigen einer in das Bauteil 1 eingefüllten Flüssigkeit eingerichtete Aufweitung des Bauteils 1 ausbildet. Die Aufweitung des Bauteils 1 wird durch die, insbesondere auch äußere, Formgebung des Zwischenabschnitts 6 erzeugt, nicht durch eine Variation der Materialstärke der Wandungen des Zwischenabschnitts im Vergleich zur Materialstärke der Wandungen des Einfüllstutzens 3, da eine solche Variation der Wandstärke für den erfindungsgemäßen Zweck deutlich zu gering ausfallen würde. An dem Einfüllstutzen 3 ist ein in seiner Schließstellung befindlicher Deckel 13 angeordnet, welcher über einen in den Figuren 8 und 9 gezeigten Rastmechanismus an dem Einfüllstutzen 3 festgelegt ist. Der Deckel 13 ist über eine flexible Lasche 14 mit einem unverlierbar an dem Einfüllstutzen 3 angeordneten Ring 15 verbunden.

Figur 8 zeigt eine Schnittdarstellung des in Figur 7 gezeigten Bauteils 1 gemäß der in Figur 7 gezeigten Schnittebene A-A. Die Aufweitung bildet eine Kammer 7 aus, die derart relativ zu dem Einfüllstutzen 3 angeordnet ist, dass eine in den Einfüllstutzen 3 eingefüllte Flüssigkeit gegen die untere Wand 8 der Kammer 7 geführt wird, die dem Einfüllstutzen 3 gegenüberliegend angeordnet ist. Wie sich aus Figur 8 ergibt, ist die Projektion der Querschnittsfläche des Einfüllstutzens 3 auf die Wand 8 teilweise umlaufend von einem Randabschnitt der Wand 8 umgeben, wobei die Projektion der Querschnittsfläche des Einfüllstutzens 3 auf die Wand 8 in einem Randbereich der Wand 8 angeordnet ist. Der Auslassabschnitt 5 ist mit einer quer zu der Wand 8 angeordneten Seite 9 der Kammer 7 verbunden. Der Auslassabschnitt 5 ist in seinem Verbindungsbereich mit der Kammer 7 trichterförmig ausgebildet und weist einen kreisförmigen Querschnitt auf.

Figur 9 zeigt eine Schnittdarstellung des in Figur 7 gezeigten Bauteils 1 gemäß der in Figur 7 gezeigten Schnittebene B-B.

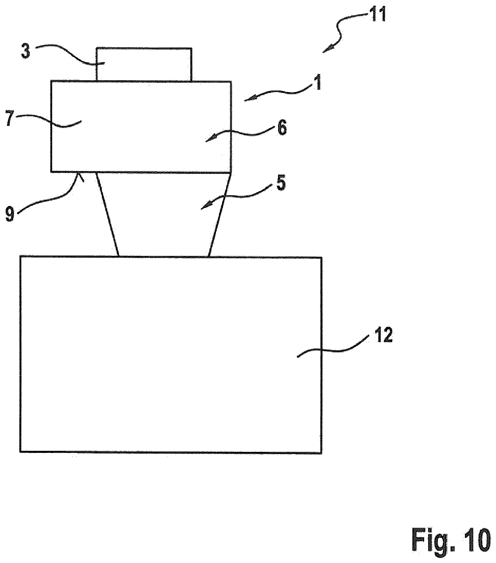

Figur 10 zeigt eine schematische Darstellung einer beispielhaften Ausführungsform der erfindungsgemäßen Baueinheit 11 zur Aufnahme einer Flüssigkeit. Die Baueinheit 11 weist einen Flüssigkeitsbehälter 12 und ein Bauteil 1 zum Einfüllen der Flüssigkeit in den Flüssigkeitsbehälter 12 auf. Das Bauteil 1 kann gemäß den Ausführungsbeispielen der Figuren 1, 3, oder 7 ausgebildet sein.

### Bezugszeichenliste:

- 1: Bauteil
- 2: Einfüllöffnung
- 3: Einfüllstutzen
- 4: Auslassöffnung
- 5: Auslassabschnitt
- 6: Zwischenabschnitt
- 7: Kammer
- 8: Wand
- 9: Seite
- 10: Befestigungslasche
- 11: Baueinheit
- 12: Flüssigkeitsbehälter
- 13: Deckel
- 14: Lasche
- 15: Ring

## Patentansprüche

1. Bauteil (1) zum Einfüllen einer Flüssigkeit in einen Flüssigkeitsbehälter (12), aufweisend einen eine Einfüllöffnung (2) umfassenden Einfüllstutzen (3) und einen mit dem Flüssigkeitsbehälter (12) verbindbaren, eine Auslassöffnung (4) umfassenden Auslassabschnitt (5), wobei wenigstens ein zwischen dem Einfüllstützen (3) und dem Auslassabschnitt (5) angeordneter Zwischenabschnitt (6) vorgesehen ist, der zumindest in seinem an den Einfüllstutzen (3) angrenzenden Bereich im Vergleich zu dem Einfüllstutzen (3) mindestens eine Aufweitung des Bauteils (1) ausbildet, wobei die Aufweitung eine Kammer (7) zum Beruhigen einer in das Bauteil (1) eingefüllten Flüssigkeit ausbildet, die derart relativ zu dem Einfüllstutzen (3) angeordnet ist, dass eine in den Einfüllstutzen (3) eingefüllte Flüssigkeit gegen eine untere Wand (8) der Kammer (7) geführt wird, die dem Einfüllstutzen (3) gegenüberliegend angeordnet ist und eine Prallfläche zur Umlenkung der Flüssigkeitsströmung bildet, wobei eine Projektion der Querschnittsfläche des Einfüllstutzens (3) auf die Wand (8) umlaufend oder teilweise umlaufend von einem Randabschnitt der Wand (8) umgeben ist, **dadurch gekennzeichnet, dass** der Auslassabschnitt (5) mit einer quer zu der Wand (8) angeordneten Seite (9) der Kammer (7) verbunden ist.

2. Bauteil (1) nach Anspruch 1, **dadurch gekennzeichnet, dass** die Projektion der Querschnittsfläche des Einfüllstutzens (3) auf die Wand (8) mittig an der Wand (8) angeordnet ist.

3. Bauteil (1) nach Anspruch 1, **dadurch gekennzeichnet, dass** die Projektion der Querschnittsfläche des Einfüllstutzens (3) auf die Wand (8) in einem Randbereich der Wand (8) angeordnet ist.

4. Bauteil (1) nach einem der Ansprüche 1 bis 3, **dadurch gekennzeichnet, dass** der Auslassabschnitt (5) trichterförmig ausgebildet ist.

5. Bauteil (1) nach einem der Ansprüche 1 bis 4, **dadurch gekennzeichnet, dass** der Auslassabschnitt (5) zumindest teilweise einen kreisförmigen Querschnitt aufweist.

6. Bauteil (1) nach einem der Ansprüche 1 bis 4, **dadurch gekennzeichnet, dass** der Auslassabschnitt (5) zumindest teilweise einen rechteckigen Querschnitt aufweist.

7. Baueinheit (11) zur Aufnahme einer Flüssigkeit, aufweisend wenigstens einen Flüssigkeitsbehälter (12) und zumindest ein Bauteil (1) zum Einfüllen der Flüssigkeit in den Flüssigkeitsbehälter (12), **dadurch gekennzeichnet, dass** das Bauteil (1) gemäß einem der Ansprüche 1 bis 6 ausgebildet ist.

## Claims

1. Component (1) for introducing a liquid into a liquid container (12), having a filler neck (3) which comprises a filling opening (2), and having an outlet section (5) which can be connected to the liquid container (12) and which comprises an outlet opening (4), wherein provision is made of at least one intermediate section (6) which is arranged between the filler neck (3) and the outlet section (5) and which forms, at least in its region adjoining the filler neck (3), at least one widening of the component (1) in comparison with the filler neck (3), wherein the widening forms a chamber (7) for calming a liquid introduced into the component (1), which chamber is arranged relative to the filler neck (3) in such a way that a liquid introduced into the filler neck (3) is guided against a lower wall (8) of the chamber (7), said lower wall being arranged opposite the filler neck (3) and forming an impact surface for diverting the liquid flow, wherein a projection of the cross-sectional area of the filler neck (3) onto the wall (8) is surrounded in an encircling manner, or in a partially encircling manner, by an edge section of the wall (8), **characterized in that** the outlet section (5) is connected to a side (9) of the chamber (7) that is arranged transversely to the wall (9).

2. Component (1) according to Claim 1, **characterized in that** the projection of the cross-sectional area of the filler neck (3) onto the wall (8) is arranged centrally on the wall (8).

3. Component (1) according to Claim 1, **characterized in that** the projection of the cross-sectional area of the filler neck (3) onto the wall (8) is arranged in an edge region of the wall (8).

4. Component (1) according to one of Claims 1 to 3, **characterized in that** the outlet section (5) is of funnel-like form.

5. Component (1) according to one of Claims 1 to 4, **characterized in that** the outlet section (5) has, at least partially, a circular cross-section.

6. Component (1) according to one of Claims 1 to 4, **characterized in that** the outlet section (5) has, at least partially, a rectangular cross-section.

7. Structural unit (11) for receiving a liquid, having at least one liquid container (12) and at least one component (1) for introducing the liquid into the liquid container (12), **characterized in that** the component (1) is designed according to one of Claims 1 to 6.

## Revendications

1. Composant (1) pour l'introduction d'un liquide dans un contenant de liquide (12), présentant une tubulure d'introduction (3) comprenant une ouverture d'introduction (2) et une section de sortie (5) pouvant être reliée au contenant de liquide (12), comprenant une ouverture de sortie (4), au moins une section intermédiaire (6) agencée entre la tubulure d'introduction (3) et la section de sortie (5) étant prévue, qui, au moins dans sa zone adjacente à la tubulure d'introduction (3), forme au moins un élargissement du composant (1) en comparaison de la tubulure d'introduction (3),
l'élargissement formant une chambre (7) pour la stabilisation d'un liquide introduit dans le composant (1), qui est agencée par rapport à la tubulure d'introduction (3) de telle sorte qu'un liquide introduit dans la tubulure d'introduction (3) est guidé contre une paroi inférieure (8) de la chambre (7), qui est agencée en vis-à-vis de la tubulure d'introduction (3) et forme une surface d'impact pour la déviation du courant de liquide, une projection de la surface de section transversale de la tubulure d'introduction (3) sur la paroi (8) étant entourée sur toute la circonférence ou sur une partie de la circonférence par une section de bord de la paroi (8), **caractérisé en ce que** la section de sortie (5) est reliée à un côté (9) de la chambre (7) agencé perpendiculairement à la paroi (8) .

2. Composant (1) selon la revendication 1, **caractérisé en ce que** la projection de la surface de section transversale de la tubulure d'introduction (3) sur la paroi (8) est agencée au centre de la paroi (8).

3. Composant (1) selon la revendication 1, **caractérisé en ce que** la projection de la surface de section transversale de la tubulure d'introduction (3) sur la paroi (8) est agencée dans une zone de bord de la paroi (8).

4. Composant (1) selon l'une quelconque des revendications 1 à 3, **caractérisé en ce que** la section de sortie (5) est configurée en forme d'entonnoir.

5. Composant (1) selon l'une quelconque des revendications 1 à 4, **caractérisé en ce que** la section de sortie (5) présente au moins partiellement une section transversale de forme circulaire.

6. Composant (1) selon l'une quelconque des revendications 1 à 4, **caractérisé en ce que** la section de sortie (5) présente au moins partiellement une section transversale rectangulaire.

7. Unité de construction (11) pour la réception d'un liquide, présentant au moins un contenant de liquide (12) et au moins un composant (1) pour l'introduction du liquide dans le contenant de liquide (12), **caractérisée en ce que** le composant (1) est configuré selon l'une quelconque des revendications 1 à 6.
